# EUROPÄISCHE PATENTSCHRIFT

(11) **EP 0 576 978 B1**
(45) Veröffentlichungstag und Bekanntmachung des Hinweises auf die Patenterteilung: **15.11.1995**
(21) Anmeldenummer: 93109988.1
(22) Anmeldetag: 23.06.1993
(51) Int. Cl.: B60T 17/08, F16J 3/02

(54) **Bremsmembran**
Brake diaphragm
Membrane de frein

(30) Priorität: 27.06.1992 DE 4221151; 10.12.1992 DE 4241537
(43) Veröffentlichungstag der Anmeldung: 05.01.1994
(73) Patentinhaber: Continental Aktiengesellschaft, 30165 Hannover (DE)
(72) Erfinder: Stöter, Bernd, D-3014 Laatzen (DE)

(56) Entgegenhaltungen:
- EP-A- 0 218 845
- DE-A- 1 480 599
- DE-A- 3 345 057
- GB-A- 1 537 492
- US-A- 2 574 700
- US-A- 3 911 796

## Beschreibung

Die Erfindung betrifft eine Bremsmembran gemäß dem Oberbegriff des Patentanspruchs 1. Derartige Bremsmembranen sind aus den Dokumenten DE-A-1 480 599 und US-A-2 574 700 bekannt.

Die übliche Auslegung von Membran-Bremszylindern sieht für Deckelteil und Gehäuseteil eine etwa gleiche innere Höhe vor, und die darin eingesetzten Bremsmembranen sind in einer Kontur geformt - insbesondere vulkanisiert - die ihrer Kontur in der Ruhestellung des Bremszylinders entspricht, also mit einer Kontur, die sich im wesentlichen aus der Innenform des Bremszylinderdeckelteils ergibt. Bezüglich des Kolbentellers weist die Membran dabei eine konvexe Wölbung auf. Sie liegt plan an dem Kolbenteller an und geht außerhalb des Kolbentellers mit einer ringförmigen Schrägen in die ringförmige Einspannung zwischen Flanschen des Deckelteils und des Gehäuseteils über. Beim Ausüben einer Bremskraft gelangt Druckluft in das Deckelteil und verdrängt die Membran zusammen mit dem Kolbenteller in Richtung Gehäuseteil. Da die Membran in der Ruhestellung nicht gedehnt ist, führt das überschüssige Material außerhalb des Kolbentellers zu einer ringförmigen Wulstausbildung, die Membran stülpt sich. Wird die Membran bis zu dem maximalen Hub verdrängt, nimmt sie durch Anliegen an Innenwänden des Gehäuseteils eine konkave Wölbung an, die im wesentlichen spiegelsymmetrisch zu der Wölbung in der Ruhestellung ist. Das Material des Wulstes ist dabei für die Ausbildung der konkaven Wölbung wieder aufgebraucht. Läßt der Bremsdruck nach, sorgt eine Rückstellfeder für die Rückstellung der Membran zusammen mit dem Kolbenteller und der mit diesem verbundenen Kolbenstange in die Ruhestellung.

Die bekannten Bremszylinder können als Kurzhubzylinder und als Langhubzylinder ausgebildet sein. Die beiden Ausführungsformen unterscheiden sich durch die innere Höhe von Deckelteil und Gehäuseteil und durch die Membranausbildung, die bei einem Langhubzylinder gegenüber einem Kurzhubzylinder eine größere Bewegungsamplitude ermöglichen muß.

Die bekannten Bremszylinder werden im Nutzfahrzeugbereich häufig in Verbindung mit einem bekannten Federspeicher in Form eines Kombizylinders ausgebildet. Der zylindrische Innenraum für den Federspeicher ist durch einen Zwischenflansch mit dem Bremszylinder verbunden. Der Zwischenflansch bildet dabei sowohl das Deckelteil für den Federspeicher als auch das Deckelteil für den Bremszylinder. Für den Hersteller von Kombizylindern ist es somit erforderlich, für die Zwischenflansche verschiedene Metallformen vorzusehen, wenn Kombizylinder sowohl in Kurzhub- als auch in Langhubausführung produziert werden sollen.

Der Erfindung liegt die Aufgabe zugrunde, eine gattungsgemäße Bremsmembran zu schaffen, die in bezug auf ihre Einspannebene ungleiche Verformungshube einerseits in Richtung der Ruhestellung und andererseits in Richtung des Maximalhubes des Bremszylinders ausführen kann, ohne daß sich bei diesen Verformungen störende Ungleichmäßigkeiten - insbesondere Unstetigkeiten - im Kraftverlauf ergeben und ohne daß herstellungsbedingte Leckagen zu befürchten sind.

Diese Aufgabe wird erfindungsgemäß durch eine gattungsgemäße Bremsmembran gelöst, die gemäß dem kennzeichnenden Teil des Patentanspruchs 1 ausgebildet ist.

Dadurch, daß die erfindungsgemäße Bremsmembran bei ihrer Herstellung in der Kontur ihrer maximalen Bremsstellung geformt ist, nimmt sie beim Bremsvorgang diese Form willig wieder an, ohne daß bereichsweise eingeformte Steifigkeiten überwunden werden müssen. Außerdem wirkt sich vorteilhaft aus, daß der Rohling einer erfindungsgemäßen Bremsmembran, der in der Kontur der maximalen Bremsstellung vulkanisiert wird, nur in einer Richtung tiefgezogen ist, während eine Vulkanisation in der Kontur der Ruhestellung zur Ausbildung des Rollwulstes einen zweifachen Tiefziehvorgang in entgegengesetzten Richtungen voraussetzt. Bei diesem zweifachen Tiefziehvorgang kann das üblicherweise in Bremsmembranen eingelagerte Verstärkungsgewebe an beiden Seiten der Membranwanderung an die Oberfläche treten, wodurch die Gewebefäden kapillare Öffnungen - also Leckagen - in der Membranwandung bilden, die diese unbrauchbar machen.

Die erfindungsgemäße Ausbildung der Bremsmembran in Verbindung mit dem an sich bekannten unsymmetrischen Aufbau des Bremszylinders hat weiterhin zur Folge, daß die Verringerung der wirksamen Membranfläche für die Kraftübertragung durch den Wulst bereits in der Ruhestellung wirksam ist und über einen wesentlichen Teil des Gesamthubes der Membran im wesentlichen unverändert aufrechterhalten bleibt. Erst gegen Ende des Hubes kurz vor dem Erreichen der maximalen Bremsstellung verkleinert sich die wirksame Membranfläche. Dies hat zur Folge, daß die Kennlinie eines mit einer erfindungsgemäßen

Bremsmembran ausgerüsteten unsymmetrischen Bremszylinders von der Ruhestellung bis über einen weiten Hubbereich erheblich linearer verläuft als die Kennlinien herkömmlicher Bremszylinder. Erst gegen Ende der maximalen Hubbewegung ergibt sich eine Abweichung von dem im wesentlichen linearen Verlauf der Kennlinie.

Ferner wird bei Verwendung erfindungsgemäßer Bremsmembranen der Vorteil erzielt, daß bei der Herstellung von Bremszylindern für die Ausführung als Kurzhubzylinder und als Langhubzylinder gleiche Deckelteile verwendet werden können. Für die Herstellung eines Langhubzylinders muß gegenüber dem üblichen Kurzhubzylinder lediglich ein anderes Gehäuseteil mit größerer innerer Höhe angesetzt und anstelle einer konventionellen Membran eine erfindungsgemäße Bremsmembran verwendet werden. Ein besonderer Vorteil ergibt sich bei der Herstellung von Kombizylindern in Kurzhub- und Langhubausführung, weil dort der aufwendig herzustellende Zwischenflansch unverändert beibehalten werden kann.

Die inneren Höhen des Deckelteils und des Gehäuseteils und die Form der Membran sind vorzugsweise so aufeinander abgestimmt, daß sich der Wulst der Membran in der Ruhestellung in Hubrichtung bis über ihre Einspannebene, also die Trenn- bzw. Fügeebene zwischen Deckelteil und Gehäuseteil, hinaus erstreckt.

Erfindungsgemäß ist die Membran in einem Formwerkzeug geformt, das der Kontur der Membran in der maximalen Bremsstellung entspricht. Während konventionelle Bremsmembranen grundsätzlich in der Form der Ruhestellung geformt werden und ihre Montage in den Bremszylinder ebenfalls in der Ruhestellung erfolgt, kann bei der erfindungsgemäßen Bremsmembran die Montage in der maximalen Hubstellung erfolgen. Hierbei muß gegebenenfalls die Rückstellfeder des Bremszylinders in gespannter Stellung gehalten werden.

Trotz Formung der Membran in der Kontur der maximalen Bremsstellung läßt sich aber auch eine Montage in der Ruhestellung der Membran erreichen, wenn die Membran durch geeignete Maßnahmen in die Kontur der Ruhestellung gebracht und in dieser Kontur vorübergehend fixiert wird. Eine solche Fixierung ist beispielsweise durch die Aufbringung einer aushärtenden, spröden Beschichtung möglich, die vorzugsweise auf der drucklosen Seite der Membran erfolgt. Diese Beschichtung muß so ausgebildet sein, daß sie bei der Bremsbetätigung der Membran abplatzt, um die erforderliche Bewegung der Membran in die Bremsstellung nicht zu behindern. In einer ähnlichen Ausführungsform kann zum gleichen Zweck eine Schrumpffolie auf die Membran aufgebracht werden, die bei der Inbetriebnahme abreißt.

Eine weitere Möglichkeit der Fixierung der Membran in der Kontur der Ruhestellung besteht darin, die Membran nach dem Vulkanisieren in der Form der maximalen Bremsstellung unmittelbar nach dem Entformen noch im heißen Zustand in die Form der Ruhestellung zu stülpen, wodurch sie nach dem Erkalten diese Form beibehält. Weiterhin ist es möglich, die Membran nach dem Entformen und Abkühlen und ggf. einer Endbearbeitung zu stülpen und dann einer Wärmebehandlung zu unterziehen, die dafür sorgt, daß die Membran die gestülpte Kontur beibehält.

Besonders vorteilhaft ist es, die Membran in dem Bereich, in dem sich der ringförmige Wulst in der Ruhestellung ausbildet, an der Außenseite des Wulstes, also auf der drucklosen Seite, mit ringförmigen Rillen zu versehen, die eine gewisse Materialentlastung für die Dehnbeanspruchung des Membranmaterials bei der Wulstausbildung bewirken.

Ferner kann es zweckmäßig sein, die erfindungsgemäße Membran, vorzugsweise zusätzlich, am Übergang von dem an dem Kolbenteller anliegenden Teil zum Wulst auf der Innenseite der sich dabei ergebenden Biegung mit ringförmigen Rillen zu versehen. Die ringförmigen Rillen, die sich auf der Innenseite der Biegung, also ebenfalls auf der drucklosen Seite, befinden, dienen dabei zur Entlastung der Materialstauchung auf der Innenseite der Biegung.

Durch die in den beiden genannten Bereichen eingeformten Rillen entstehen in der Membranwandung zwei Sollbiegebereiche, durch die sich die erfindungsgemäße Membran in ihrer gestülpten, dem drucklosen Zustand des Bremszylinders entsprechenden Form in einem spannungsarmen stabilen Zustand befindet. Dies wirkt sich sowohl bei der Montage als auch bezüglich der Haltbarkeit der Membran vorteilhaft aus.

Die erfindungsgemäße Bremsmembran ist vorzugsweise als gewebeverstärkte Gummimembran ausgebildet. Die ggf. vorhandenen Rillen befinden sich dann in der Gummischicht außerhalb des Gewebes.

Die Erfindung soll im folgenden anhand eines in der Zeichnung dargestellten Ausführungsbeispiels näher erläutert werden. Es zeigen:
- Fig. 1: einen Längsschnitt durch einen mit einem Zwischenflansch eines Kombizylinders gebildeten Bremszylinder mit einer Darstellung der erfindungsgemäßen Bremsmembran in der Ruhestellung in der oberen Hälfte und in der maximalen Bremsstellung in der unteren Hälfte
- Fig. 2: eine Detaildarstellung des gebildeten Ringwulstes der erfindungsgemäßen Membran, die im Bereich des Ringwulstes mit ringförmigen Entlastungsrillen versehen ist.

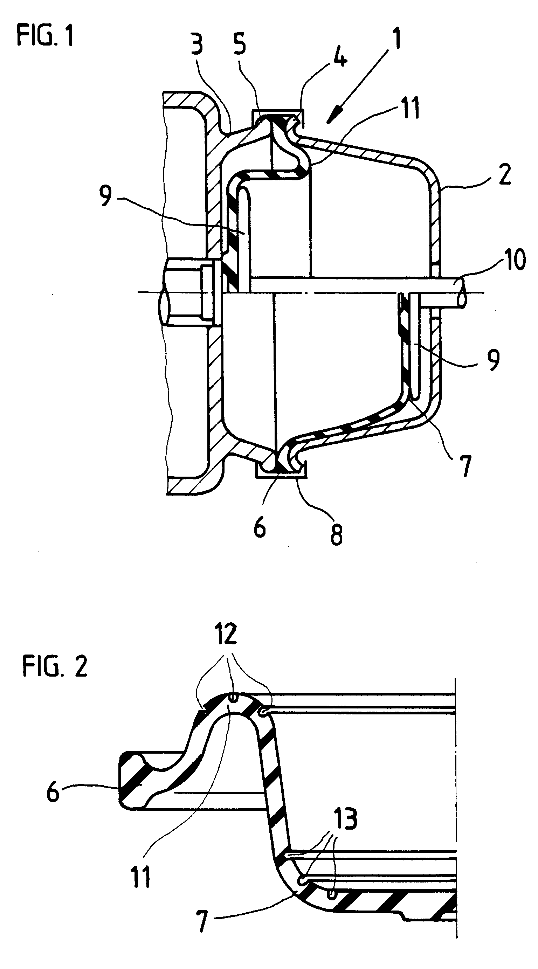

Fig. 1 zeigt einen Bremszylinder 1, dessen Gehäuse aus einem Gehäuseteil 2 und einem Deckelteil 3 besteht. Das Deckelteil 3 ist als Zwischenflansch eines in Fig. 1 nur angedeuteten Kombizylinders ausgebildet, dient somit gleichzeitig als Deckelteil für den Zylinder eines Federspeichers, mit dem die Funktion der Bremse als Feststellbremse erzielbar ist.

Gehäuseteil 2 und Deckelteil 3 sind entgegengesetzt topfförmig gewölbt und weisen an ihren freien Rändern Jeweils einen Flansch 4, 5 auf, die einen sich konisch nach radial außen erweiternden Aufnahmeraum bilden. In diesem Raum ist ein entsprechend verdickter Rand 6 einer geformten Membran 7 eingelegt, die somit ringsum zwischen den Flanschen 4, 5 eingespannt ist. Gehäuseteil 2 und Deckelteil 3 werden durch ein die Flansche 4, 5 übergreifendes Spannband 8 zusammengehalten.

An der Membran 7 liegt ein Kolbenteller 9 an, an den sich eine die Bremseinrichtung betätigende Kolbenstange 10 anschließt.

In der unteren Hälfte der Fig. 1 ist die Membran 7 in ihrer maximalen Bremsstellung, also mit maximalem Hub und mit einer der Wölbung des Gehäuseteils 2 entsprechenden Wölbung dargestellt. Die Membran verläuft plan auf dem Kolbenteller 9 und geht mit einem nahezu linearen Übergang in den eingespannten Rand 6 über. Die Membran 7 ist in einer dieser Kontur entsprechenden Vulkanisationsform hergestellt und somit in der Kontur der maximalen Bremsstellung geformt.

Durch eine (nicht dargestellte) Rückstellfeder wird der Kolbenteller 9 und damit die Membran in eine in der oberen Hälfte der Fig. 1 dargestellte Ruhestellung zurückgestellt. Da die Wölbung des Deckelteils 3 - ausgehend von der Trennebene zwischen den Flanschen 4, 5 - eine wesentlich geringere innere Höhe besitzt als das Gehäuseteil 2, weist die Membran in der Ruhestellung "überschüssiges" Material im Randbereich außerhalb des Kolbentellers 9 auf. Die Membran bildet daher außerhalb des Kolbentellers 9 einen ringförmigen Wulst 11 aus, der in Richtung Gehäuseteil 2 gerichtet ist und sich im Ruhezustand über die Trennebene zwischen den Flanschen 4, 5 hinaus in das Gehäuseteil 2 hinein erstreckt. Aufgrund des in der Ruhestellung bereits ausgebildeten Wulstes 11 verändert sich die wirksame Fläche der Membran bei der Verschiebung des Kolbentellers 9 in Richtung Gehäuseteil 2 über den größten Teil des Hubweges des Kolbentellers 9 beim Übergang aus der Ruhestellung in die maximale Bremsstellung praktisch nicht. Erst wenn sich der Wulst 11 auflöst und "streckt", ergibt sich eine verkleinerte wirksame Fläche der Membran 7 und damit eine verringerte Kraftübertragung durch die Membran 7. Hieraus resultiert eine höhere Linearität der Kraftübertragung durch die erfindungsgemäße Bremsmembran über einen erheblichen Teil des Hubweges des Kolbentellers 9 und der mit ihm verbundenen Kolbenstange 10.

Fig. 2 zeigt eine Detaildarstellung der Membran 7 in der Ruhestellung. Die Membran 7 weist im Bereich des sich in der Ruhestellung ausbildenden Wulstes 11 an der Außenseite des Wulstes angeordnete ringförmig umlaufende Rillen 12 auf, die für eine Materialentlastung des sonst in diesem Bereich stark gedehnten Materials der Membran 7 sorgen und damit die Membran in der Ruhestellung eine stabile Lage einnehmen lassen und die gleichzeitig die Haltbarkeit der Membran verbessern.

Bei der Ausbildung des Wulstes 11 entsteht am Übergang von dem am Kolbenteller 9 anliegenden Teil der Membran zum Wulst 11 eine Biegung, auf deren Innenseite ringförmig umlaufende Rillen 13 angeordnet sind, die die Materialstauchung auf der Innenseite der Biegung verringern und dazu beitragen, daß die Membran in der Ruhestellung eine stabile, spannungsarme Form mit im wesentlichen ebenem Boden einnimmt.

Die Membran 7 besteht vorzugsweise aus einem nicht dehnbaren Gewebe, das, vorzugsweise beidseitig, mit einem Elastomer (Gummi) beschichtet und vulkanisiert worden ist. Die Rillen 12, 13 werden dabei nur in dem Gummimaterial ausgebildet.

## Patentansprüche

1. Bremsmembran (7) in einem ein Gehäuseteil (2) und ein Deckelteil (3) aufweisenden Bremszylinder (1), in dem sie im bestimmungsgemäß montierten Zustand in der Trennebene zwischen Gehäuseteil (2) und Deckelteil (3) ringsum befestigt ist und den Innenraum des Deckelteils (3) gegen den Umgebungsdruck abdichtet und mit einer Abrollbewegung aus einer Ruhestellung des Bremszylinders (1), in der sie im Innern des Deckelteils (3) anliegt, in eine maximale Bremsstellung, in der sie im Innern des Gehäuseteils (2) anliegt, mit einem in das Deckelteil (3) eingedrückten Fluid verschiebbar ist und dabei über einen Kolbenteller (9) eine Kolbenstange (10) verschiebt, wobei die innere Höhe des Deckelteils (3) wesentlich geringer ist als die innere Höhe des Gehäuseteils (2) und die Membran (7) in der Ruhestellung außerhalb des Kolbentellers (9) einen zum Gehäuseteil (2) gerichteten ringförmigen Wulst (11) bildet, der sich mit seiner Außenflanke an die Innenfläche des Gehäuseteils (2) anschmiegt und sich der Wulst (11) in der Ruhestellung bis über die Trennebene zwischen Deckelteil (3) und Gehäuseteil (2) hinaus erstreckt, dadurch gekennzeichnet, daß sie in einer Kontur geformt, insbesondere vulkanisiert ist, die ihrer Kontur in der maximalen Bremsstellung entspricht.

2. Bremsmembran nach Anspruch 1, dadurch gekennzeichnet, daß sie nach ihrer Formung in einer Kontur fixiert ist, die ihrer Kontur in der Ruhestellung des Bremszylinders entspricht.

3. Bremsmembran nach Anspruch 2, dadurch gekennzeichnet, daß die Fixierung ihrer Kontur durch eine aushärtende spröde Beschichtung erfolgt ist, die bei der Inbetriebnahme abplatzt.

4. Bremsmembran nach Anspruch 2, dadurch gekennzeichnet, daß die Fixierung ihrer Kontur durch eine mit ihr verbundene Schrumpffolie erfolgt ist, die bei der Inbetriebnahme abreißt.

5. Bremsmembran nach Anspruch 3 oder 4, dadurch gekennzeichnet, daß die Fixierung ihrer Kontur auf ihrer drucklosen Seite angebracht ist.

6. Bremsmembran nach einem der Ansprüche 1 bis 5, dadurch gekennzeichnet, daß in dem Bereich, in dem sich in der Ruhestellung des Bremszylinders der ringförmige Wulst (11) ausbildet, an dessen Außenseite konzentrisch umlaufende Rillen (12) eingeformt sind.

7. Bremsmembran nach einem der Ansprüche 1 bis 6, dadurch gekennzeichnet, daß sie am Übergang von dem an dem Kolbenteller (9) anliegenden Teil zum Wulst (11) auf der Innenseite der sich dabei ergebenden Biegung ringförmige Rillen (13) aufweist.

8. Bremsmembran nach Anspruch 6 oder 7, dadurch gekennzeichnet, daß sie als gewebeverstärkte Gummimembran ausgebildet ist und daß sich die Rillen (12, 13) in der Gummischicht außerhalb des Gewebes befinden.

## Claims

1. Brake diaphragm (7) in a brake cylinder (1), which cylinder has a housing portion (2) and a cover portion (3), and in which cylinder the diaphragm is secured all around in its required assembled state in the parting plane between housing portion (2) and cover portion (3), said diaphragm sealing the interior of the cover portion (3) from the ambient pressure and being displaceable with a rolling movement from an inoperative position of the brake cylinder (1), in which position it lies in the interior of the cover portion (3), into a maximum braking position, in which it lies in the interior of the housing portion (2), by means of a fluid which is forced into the cover portion (3), and said diaphragm thereby displaces a piston rod (10) via a piston plate (9), the internal height of the cover portion (3) being substantially smaller than the internal height of the housing portion (2), and the diaphragm (7) forming, in the inoperative position externally of the piston plate (9), an annular bead (11), which is orientated towards the housing portion (2) and has its external wall fitting close to the internal face of the housing portion (2), and the bead (11) in the inoperative position extends beyond the parting plane between cover portion (3) and housing portion (2), characterised in that it is shaped, more especially vulcanised, in a configuration which corresponds to its configuration in the maximum braking position.

2. Brake diaphragm according to claim 1, characterised in that, after being shaped, it is fixed in a configuration which corresponds to its configuration in the inoperative position of the brake cylinder.

3. Brake diaphragm according to claim 2, characterised in that its configuration is fixed by an age-hardening, brittle coating which chips-off during the starting operation.

4. Brake diaphragm according to claim 2, characterised in that its configuration is fixed by a shrinkable film, which is connected thereto and separates during the starting operation.

5. Brake diaphragm according to claim 3 or 4, characterised in that its configuration is fixed on its pressureless side.

6. Brake diaphragm according to one of claims 1 to 5, characterised in that circumferential grooves (12) are concentrically provided on the outside of the annular bead (11) in the region in which said bead is situated in the inoperative position of the brake cylinder.

7. Brake diaphragm according to one of claims 1 to 6, characterised in that it has annular grooves (13) at the transitional region between the part abutting against the piston plate (9) and the bead (11), on the inside of the resultant bend.

8. Brake diaphragm according to claim 6 or 7, characterised in that it is configured as a fabric-reinforced rubber diaphragm, and in that the grooves (12, 13) are situated in the rubber layer externally of the fabric.

## Revendications

1. Membrane de frein dans un cylindre de frein (1) comportant une partie boîtier (2) et une partie couvercle (3), dans lequel elle est fixée sur son pourtour, à l'état correctement monté, dans le plan de séparation entre la partie boîtier (2) et la partie couvercle (3), et assure l'étanchéité du volume intérieur de la partie couvercle (3) à l'égard de la pression environnante et, avec un mouvement de roulement, est déplaçable d'une position de repos du cylindre de frein (1), dans laquelle elle s'applique à l'intérieur de la partie couvercle (3), dans une position de freinage maximal, dans laquelle elle s'applique à l'intérieur de la partie boîtier (2), au moyen d'un fluide envoyé sous pression dans la partie couvercle (3) et déplace ainsi, par un plateau de piston (9), une tige de piston (10), la hauteur inférieure de la partie couvercle (3) étant sensiblement inférieure à la hauteur intérieure de la partie boîtier (2) et la membrane (7) formant en position de repos à l'extérieur du plateau de piston (9), un bourrelet (11) annulaire dirigé vers la partie boîtier (2), qui s'applique par son flanc extérieur contre la surface intérieure de la partie boîtier (2) et le bourrelet (11) s'étendant en position de repos jusqu'au-delà du plan de séparation entre la partie couvercle (3) et la partie boîtier (2), caractérisée en ce qu'elle est formée, en particulier vulcanisée, suivant un contour qui correspond au contour dans la position de freinage maximal.

2. Membrane de frein selon la revendication 1, caractérisée en ce qu'après son formage elle est fixée dans un contour qui correspond au contour en position de repos du cylindre de frein.

3. Membrane de frein selon la revendication 2, caractérisée en ce que la fixation de son contour s'effectue au moyen d'une couche de revêtement cassante et durcissante, qui s'écaille lors de la mise en service.

4. Membrane de frein selon la revendication 2, caractérisée en ce que la fixation de son contour s'effectue au moyen d'une feuille rétractable assemblée avec celle-ci, qui se déchire lors de la mise en service.

5. Membrane de frein selon les revendications 3 ou 4, caractérisée en ce que la fixation de son contour est appliquée sur son côté sans pression.

6. Membrane de frein selon l'une des revendications 1 à 5, caractérisée en ce que dans la zone dans laquelle se forme le bourrelet annulaire (11) en position de repos du cylindre de frein, des gorges (12) périphériques et concentriques sont formées sur son côté extérieur.

7. Membrane de frein selon l'une des revendications 1 à 6, caractérisée en ce qu'elle présente des gorges annulaires (13) au droit de la transition entre la partie s'appliquant contre le plateau de piston (9) et le bourrelet (11), sur le côté intérieur de la courbure qui en résulte.

8. Membrane de frein selon les revendications 6 ou 7, caractérisée en ce qu'elle est réalisée sous la forme d'une membrane en caoutchouc renforcée d'un tissu et en ce que les gorges 12, 13 se trouvent dans la couche de caoutchouc à l'extérieur du tissu.
